# EUROPEAN PATENT APPLICATION

(11) **EP 4 691 822 A1**
(43) Date of publication of application: **11.02.2026**
(21) Application number: 25190888.5
(22) Date of filing: 22.07.2025
(51) Int. Cl.: B60K 6/46, B60W 10/06, B60W 10/08, B60W 10/18, B60W 10/188, B60W 10/30, B60W 20/15, B60W 20/17, B60W 20/40, B60W 30/18, B60K 6/26

(54) **CONTROL DEVICE OF HYBRID VEHICLE**

(30) Priority: 05.08.2024 JP 2024128976
(71) Applicant: Suzuki Motor Corporation, Shizuoka 432-8611 (JP)
(72) Inventor: GOTO, Shunsuke, HAMAMATSU-SHI, 432-8611 (JP); YAMAMOTO, Wataru, HAMAMATSU-SHI, 432-8611 (JP)
(74) Representative: Plasseraud IP

(57) **Abstract**

[Object]

It is to provide a control device of a hybrid vehicle capable of preventing a NVH performance from deteriorating.

[Solution]

There is included a control unit to, when a negative pressure in a negative pressure chamber of a brake booster decreases below a lower limit threshold value THd, drive an MG1 to rotate a crankshaft of an engine to thereby recover the decreased negative pressure in the negative pressure chamber. Then, the control unit drives the MG1 so as to rotate the engine at a target engine rotation speed depending on a vehicle speed.

## Description

### [Technical Field]

The present invention relates to a control device of a hybrid vehicle.

### [Background Art]

As a prior art, there is known Patent Literature 1 relating to a control device of a hybrid vehicle, in which when a stored negative-pressure in a brake booster drops below a lower limit threshold value, a motoring of rotating an internal combustion engine using a motor is performed.

### [Citation List]

### [Patent Literature]

[Patent Literature 1] JP 2021-54241 A

### [Summary of Invention]

### [Technical Problem]

However, in such a prior art, there is a problem that a noise due to the motoring may deteriorate a NVH (Noise, Vibration, Harshness) performance.

Thus, an object of the present invention is to provide a control device of a hybrid vehicle capable of preventing a NVH performance from deteriorating.

### [Solution to Problem]

According to an aspect of the present invention, there is provided a control device of a hybrid vehicle, the hybrid vehicle including: an engine; a motor to rotate together with the engine; a brake device to generate a braking force; and a brake booster to reinforce the braking force using an intake negative pressure in the engine, the control device including
a control unit to, when a negative pressure in a negative pressure chamber of the brake booster decreases, drive the motor to rotate the engine to thereby recover the negative pressure in the negative pressure chamber, wherein at the decrease of the negative pressure, the control unit drives the motor so as to rotate the engine at a target engine rotation speed depending on a vehicle speed.

### [Advantageous Effect of Invention]

According to the present invention, it is possible to prevent a NVH performance from deteriorating.

### [Brief Description of Drawings]

Fig. 1 is a diagram of a vehicle mounted with a control device according to an embodiment of the present invention.
Fig. 2 is a flowchart which shows a motor control process to be performed in the control device according to the embodiment.

### [Description of Embodiment]

A control device according to an embodiment of the present invention is mounted on a hybrid vehicle, the hybrid vehicle including: an engine; a motor to rotate together with the engine; a brake device to generate a braking force; and a brake booster to reinforce the braking force using an intake negative pressure in the engine, the control device including a control unit to, when a negative pressure in a negative pressure chamber of the brake booster decreases, drive the motor to rotate the engine to thereby recover the negative pressure in the negative pressure chamber, wherein at the decrease of the negative pressure, the control unit drives the motor so as to rotate the engine at a target engine rotation speed depending on a vehicle speed.

Accordingly, it is possible to prevent a NVH performance from deteriorating.

### [Embodiment(s)]

Hereinafter, referring to Figs., a hybrid vehicle mounted with a control device according to an embodiment of the present invention will be described.

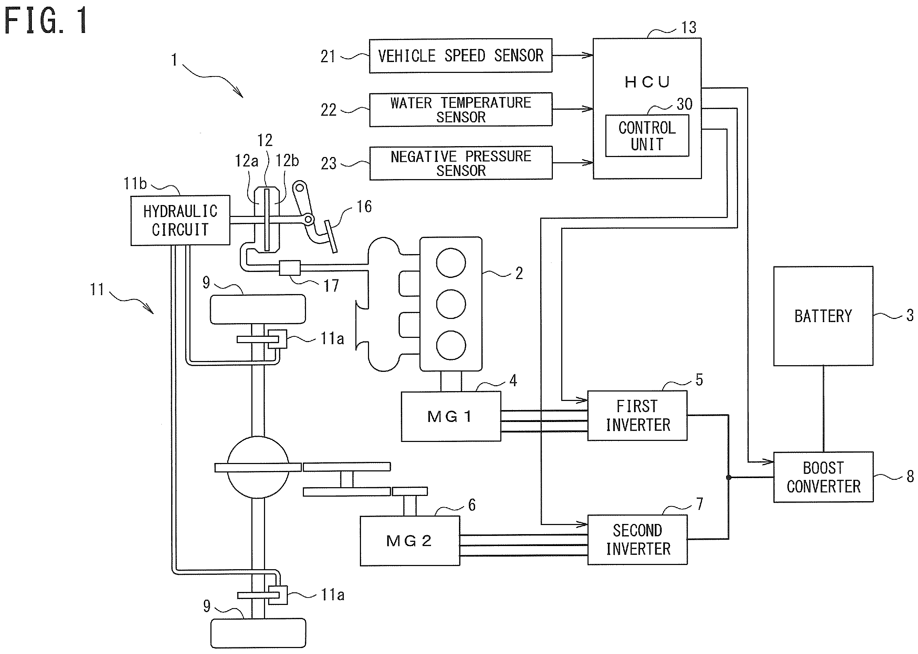

As shown in FIG. 1, a hybrid vehicle 1 includes an internal combustion engine 2 (hereinafter referred to simply as "engine"), a battery 3, a first motor 4 (hereinafter referred to also as "MG1"), a first inverter 5, a second motor 6 (hereinafter referred to also as "MG2"), a second inverter 7, a boost converter 8, driving wheels 9, a brake device 11, a brake booster 12, and a hybrid controller 13 (hereinafter referred to simply as "HCU").

The engine 2 is formed with a plurality of cylinders. The engine 2 is configured to perform, for each of the cylinders, a series of four steps of an intake step, a compression step, an expansion step, and an exhaust step, to thereby generate a mechanical power.

The battery 3 is of a secondary battery (i.e., rechargeable battery), such as a lithium-ion battery. The battery 3 is configured to store an electric power generated by the MG1/MG2, to thereby supply the stored electric power to the MG1 and the MG2 to drive them.

The MG1 is connected to a crankshaft of the engine 2 so as to rotate together therewith. The MG1 is electrically connected to the battery 3 through the first inverter 5 and the boost converter 8. The MG1 has a motor function of rotating with an electric power supplied from the battery 3 to thereby rotate the crankshaft of the engine 2, and a generator function of converting a mechanical power generated by the engine 2 into an electric power.

The MG2 is connected to the driving wheels 9 via a power transmission member such as a gear mechanism, to thereby rotate together with the driving wheels 9. The MG2 is electrically connected to the battery 3 through the second inverter 7 and the boost converter 8.

The MG2 has a motor function of rotating with an electric power supplied from the battery 3 and/or the MG1 to thereby rotate the driving wheels 9, and a generator function of converting a rotation force of the driving wheels 9 into an electric power.

The boost converter 8 is provided between the battery 3 and the first and second inverters 5, 7, which is configured to boost a voltage of an electric power to be supplied from the battery 3 to the first and second inverters 5, 7 and to step down a voltage of an electric power to be supplied from the first and second inverters 5, 7 to the battery 3.

The brake device 11 is configured to apply wheels, such as the driving wheels 9, with a braking force in response to an operation force applied to a brake pedal 16. The brake device 11 includes a brake 11a, and a hydraulic circuit 11b to actuate the brake 11a.

The brake 11a is of a brake disc, for example.

The brake booster 12 is configured to reinforce a force of a driver's operation to the brake pedal 16. The reinforced operation force to the brake pedal 16 by the brake booster 12 is to be further reinforced by the hydraulic circuit 11b to thereby be transmitted to the brake 11a.

The brake booster 12 is formed with a negative pressure chamber 12a to store a negative pressure, and an atmospheric pressure chamber 12b on which an atmospheric pressure acts. The brake booster 12 is to reinforce the operation force applied to the brake pedal 16, using a differential pressure between pressures in the respective negative and atmospheric pressure chambers 12a, 12b.

The negative pressure chamber 12a communicates with, through a check valve 17, an intake passage of the engine 2. The check valve 17 is configured to prohibit an air from flowing from the intake passage of the engine 2 into the negative pressure chamber 12a but allow the air to flow from the negative pressure chamber 12a into the intake passage of the engine 2.

The negative pressure (negative value) in the negative pressure chamber 12a is to decrease in response to the operation to the brake pedal 16 but to be recovered by the intake negative pressure in the engine 2.

Note that in the embodiment, "decrease of negative pressure (low negative-pressure)" means that a pressure increases (i.e., an absolute value of negative pressure becomes smaller) and on the other hand, "increase of negative pressure (high negative-pressure)" means that a pressure decreases (i.e., an absolute value of negative pressure becomes greater).

The HCU 13 is constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the HCU 13, in addition to various constants and maps. That is, the CPU executes the program stored in the ROM using the RAM as an operation area, causing the computer unit to function as the HCU 13.

The input port of the HCU 13 is connected with various sensors including a vehicle speed sensor 21 to detect a vehicle speed, a water temperature sensor 22 to detect temperature of a cooling water in the engine 2, and a negative pressure sensor 23 to detect the negative pressure in the negative pressure chamber 12a.

The output port of the HCU 13 is connected with various control-targets including the first inverter 5, the second inverter 7, and the boost converter 8. The HCU 13 is configured to control such various control-targets connected to the output port, based on information obtained from the various sensors connected to the input port.

In the embodiment, the HCU 13 is to function as a control unit 30 to drive the MG1 to thereby rotate the engine 2 in order to recover the negative pressure in the negative pressure chamber 12a, when the negative pressure in the negative pressure chamber 12a decreases.

Specifically, when the detected negative pressure by the negative pressure sensor 23 decreases below a lower limit threshold value THd (negative value), the HCU 13 is to cause the first inverter 5 to drive the MG1 to thereby rotate the crankshaft of the engine 2, in order to recover the negative pressure in the negative pressure chamber 12a.

Then, the HCU 13 drives the MG1 so as to rotate the engine 2 at a target engine rotation speed depending on the detected vehicle speed by the vehicle speed sensor 21. Specifically, the HCU 13 sets the target engine rotation speed to be higher as the detected vehicle speed is higher.

In the embodiment, there is stored in the ROM of the HCU 13 a target rotation speed map where the target engine rotation speed is associated with the vehicle speed. The HCU 13 refers to the target rotation speed map to thereby set the target engine rotation speed.

At driving the MG1 to recover the negative pressure in the negative pressure chamber 12a, the HCU 13 may set a target torque to be outputted from the MG1 (hereinafter referred to simply as "target motor torque"), based on the set target engine rotation speed and temperature of the engine 2, and control the first inverter 5 and the like so that the set target motor torque is outputted from the MG1.

Specifically, thereat, the HCU 13 sets the target motor torque for the MG1, based on the target engine rotation speed depending on the vehicle speed and the detected temperature of the cooling water (hereinafter referred to simply as "engine water temperature") by the water temperature sensor 22.

Hence, the target motor torque is to vary with the engine water temperature defined as temperature of the engine 2.

More specifically, the HCU 13 sets the target motor torque to be greater as the target engine rotation speed is lower. In addition, the HCU 13 sets the target motor torque to be larger as the engine water temperature is lower.

As such, the HCU 13 may be configured to control the first inverter 5 and the like so that the set target motor torque based on the target engine rotation speed and the engine water temperature is outputted from the MG1, to thereby rotate the engine 2 at the target engine rotation speed. In this case, immediately after the MG1 is started to be driven, the motor torque of the MG1 is to decrease as the rotation speed of the MG1 (i.e., rotation speed of the engine 2) increases, and when it drops to the set target motor torque, the HCU 13 may hold the motor torque thereat, for example.

In the embodiment, there is also stored in the ROM of the HCU 13 a target motor torque map where the target motor torque is associated with the target engine rotation speed and the engine water temperature. The HCU 13 refers to the target motor torque map to thereby set the target motor torque for the MG1.

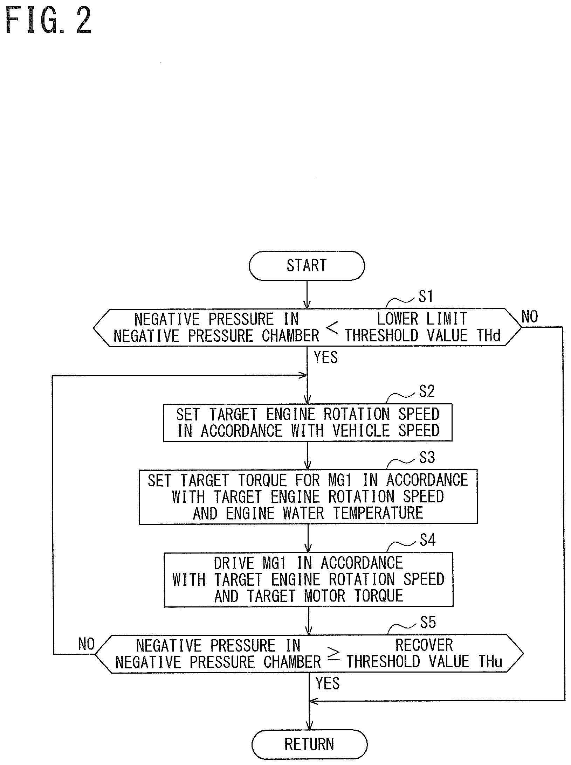

Next, referring to FIG. 2, a motor control process to be performed in the above-mentioned HCU 13 will be explained. Note that this process is to be repeatedly performed while the HCU 13 is activated.

Firstly, at step S1, the HCU 13 determines whether the detected negative pressure by the negative pressure sensor 23 is lower than the lower limit threshold value THd (i.e., whether an absolute value of the detected negative pressure is smaller than that of the lower limit threshold value THd).

If determines at step S1 that the detected negative pressure by the negative pressure sensor 23 is lower than the lower limit threshold value THd ("YES" at step S1), the HCU 13 proceeds to step S2.

Otherwise ("NO" at step S1), the HCU 13 terminates this process to thereby repeat it.

At step S2, the HCU 13 sets the target engine rotation speed in accordance with the current vehicle speed. After step S2, the HCU 13 proceeds to step S3.

At step S3, the HCU 13 sets the target motor torque in accordance with the set target engine rotation speed at step S2 and the current engine water temperature. After step S3, the HCU 13 proceeds to step S4.

At step S4, the HCU 13 drives the MG1 in accordance with the set target motor torque associated with the set target engine rotation speed. Specifically, the HCU 13 drives the MG1 so as to output the target motor torque from the MG1, to thereby rotate the engine 2 at the set target engine rotation speed.

After step S4, the HCU 13 proceeds to step S5.

At step S5, the HCU 13 determines whether or not: the detected negative pressure by the negative pressure sensor 23 is a recover threshold value THu (negative value) or higher (i.e., an absolute value of the detected negative pressure reaches or exceeds that of the recover threshold value THu).

If determines at step S5 that the detected negative pressure by the negative pressure sensor 23 is the recover threshold value THu or higher ("YES" at step S5), the HCU 13 stops driving the MG1 to thereby terminate this process.

Otherwise ("NO" at step S5), the HCU 13 proceeds to step S2 again.

As such, the control device according to the embodiment is configured to:
when the negative pressure in the negative pressure chamber 12a decreases below a predetermined lower limit threshold value, drive the MG1 so as to rotate the engine 2 at the target engine rotation speed depending on the vehicle speed. Thus, a drive state of the MG1 is to be adjusted in accordance with a traveling sound of the vehicle 1, thereby preventing the NVH performance from deteriorating at the negative pressure recovering.

Specifically, the control device sets the target engine rotation speed to be higher as the vehicle speed becomes higher. That is, a driving sound at the MG1 is to be smaller as the traveling sound of the vehicle 1 becomes smaller, thereby avoiding an occupant(s) in the vehicle 1 from feeling uncomfortable due to the driving sound.

This is because, the traveling sound of the vehicle 1 is likely to be smaller as the vehicle speed is lower, and the relatively-large driving sound from the MG1 during relatively-low speed vehicle travel may render the occupant(s) feel uncomfortable.

Meanwhile, at a relatively-high vehicle speed, e.g., when a wind noise and/or a road noise is likely to be large, the MG1 is to be driven so as to rotate at a high rotation speed. That is, while the occupant(s) is less-likely to feel uncomfortable due to the driving sound, the MG1 is to be driven at relatively-high rotation speed to thereby rotate the engine at relatively-high rotation speed, early recovering the negative pressure in the negative pressure chamber 12a.

Accordingly, the control device sets the target engine rotation speed based on the vehicle speed correlated to the traveling sound, thereby early recovering the negative pressure in the negative pressure chamber 12a while avoiding the occupant(s) in the vehicle 1 from feeling uncomfortable due to the driving sound at the MG1.

In other words, it is possible to early ensure a negative pressure necessary for stopping the vehicle 1 in high-speed travel while avoiding the occupant(s) in the vehicle 1 from feeling uncomfortable due to the driving sound at the MG1.

At driving the MG1 for recovering the negative pressure in the negative pressure chamber 12a, the control device according to the embodiment may set the target motor torque in accordance with the target engine rotation speed and the engine water temperature. In this case, the MG1 is to be driven so as to output the set target motor torque based on the target engine rotation speed and the engine water temperature, thereby accurately and early increasing the rotation speed of the engine 2 to the target engine rotation speed even in a case of a high friction of the engine 2 due to a low engine water temperature, for example.

As mentioned above, in the embodiment, at recovering the negative pressure in the negative pressure chamber 12a, the HCU 13 drives the MG1 so as to rotate the engine 2 at the target engine rotation speed depending on the detected vehicle speed by the vehicle speed sensor 21.

Alternatively, at recovering the negative pressure in the negative pressure chamber 12a, the HCU 13 may drive the MG1 so as to rotate the MG1 at a target motor rotation speed depending on the detected vehicle speed by the vehicle speed sensor 21.

In addition, as mentioned above, at recovering the negative pressure in the negative pressure chamber 12a, the HCU 13 is to set the target motor torque based on the target engine rotation speed and the engine water temperature.

Alternatively, at recovering the negative pressure in the negative pressure chamber 12a, the HCU 13 may set the target motor torque based on such a target motor rotation speed and the engine water temperature.

Although the embodiments of the present invention have been disclosed, it is obvious that those skilled in the art can make changes without departing from the scope of the present invention. It is intended that all such modifications and equivalents are encompassed by the claims.

### [Reference Signs List]

1: hybrid vehicle
2: engine
3: battery
4: first motor (motor)
11: brake device
12: brake booster
12a: negative pressure chamber
30: control unit

## Claims

1. A control device of a hybrid vehicle (1),
the hybrid vehicle including:
an engine (2);
a motor (4) to rotate together with the engine (2);
a brake device (11) to generate a braking force; and
a brake booster (12) to reinforce the braking force using an intake negative pressure in the engine (2),
the control device comprising
a control unit (30) to, when a negative pressure in a negative pressure chamber (12a) of the brake booster (12) decreases, drive the motor (4) to rotate the engine (2) to thereby recover the negative pressure in the negative pressure chamber (12a), wherein
at the decrease of the negative pressure, the control unit (30) drives the motor (4) so as to rotate the engine (2) at a target engine rotation speed depending on a vehicle speed.

2. The control device as claimed in claim 1, wherein
the control unit (30) sets the target engine rotation speed to be higher as the vehicle speed becomes higher.

3. The control device as claimed in claim 1 or 2, wherein
at the decrease of the negative pressure, the control unit (30):
sets a target torque for the motor (4), in accordance with the target engine rotation speed and temperature of the engine (2); and
drives the motor (4) so as to output the set target torque from the motor (4).
